Europäisches Patentamt

European Patent Office

Office européen des brevets

(19)

(11) Veröffentlichungsnummer: **0 191 904**

**A1**

(12) **EUROPÄISCHE PATENTANMELDUNG**

(21) Anmeldenummer: 85113580.6

(22) Anmeldetag: 25.10.85

(51) Int. Cl.⁴: **C 21 C 5/36**
**C 04 B 5/06**

(30) Priorität: 22.02.85 DE 3505982

(43) Veröffentlichungstag der Anmeldung:
27.08.86 Patentblatt 86/35

(84) Benannte Vertragsstaaten:
AT FR LU

(71) Anmelder: **Klimanek GmbH**
**Kastanienweg 9**
**D-6680 Wiebelskirchen(DE)**

(72) Erfinder: **Klimanek, Erich, Dipl.-Ing.**
**Kastanienweg 9**
**D-6680 Wiebelskirchen(DE)**

(54) **Verfahren zur Herstellung entsorgungsfähiger Filterstäube.**

(57) Das Vorhandensein von flüssigen Prozessschlacken, die bei der Gewinnung von Roheisen, Stahl oder anderen Giessereiprodukten anfallen, wird dazu ausgenützt, um Filterstäube in die benannten Prozeßschlacken einzubinden. Dadurch wird der Verstaubungsgefahr bei der Entsorgung dieser Stäube und einer Bodenlöslichkeit von sonädlichen Metallen, die in solchen Stäuben enthalten sein können, so begegnet, daß eine umweltfreundlichere Entsorgung für diese Filterstäube geschaffen wird.

EP 0 191 904 A1

KLIMANEK GmbH · Kastanienweg 9 · 6680 Wiebelskirchen

**Europäisches Patentamt**

Erhardtstraße 27

**8000 München 2**

6680 Wiebelskirchen/Saar
Kastanienweg 9
Telefon (06821) 52575

Bankverbindung:
Städtsparkasse Neunkirchen
(BLZ 592 500 00) Konto 5797

X I X.

| Ihr Zeichen | Ihre Nachricht | Unser Zeichen | Tag | 18. November 1985 24. 10. 1985 |
|---|---|---|---|---|

**Patentbezeichnung:**

Verfahren zur Herstellung entsorgungsfähiger Filterstäube.

Die Erfindung betrifft ein Verfahren zur Herstellung entsorgungsfähiger Filterstäube.

Es ist bekannt, daß flüssige Prozeßschlacken, die bei der Gewinnung von Roheisen, Stahl oder sonstigen Gießereiprodukten anfallen, Zusatzstoffe zugeführt werden, aber immer handelt es sich dabei darum, daß mit diesen Zusatzstoffen eine Wiederverwendbarkeit der Prozeßschlacken angestrebt wird, beispielsweise als Flußmittel, zur besseren Zitratlöslichkeit als Düngemittel oder zur Verbesserung als Straßenbaustoff. Hier verfolgen die Zusätze immer den Zweck einer Verbesserung für bestimmte Verwendungszwecke.

Dahingegen ist die Entsorgung von Filterstäuben über flüssige Prozeßschlacken unbekannt. Die Entsorgung solcher Stäube erfolgt immer mehr über Pelletisieren dieser Stäube, weil unpelletisierte Stäube eine hohe Verstaubungsgefahr haben. Aber selbst die Pelletisierung stellt keine optimale Entsorgung dar, weil die Pellets leicht zerfallen und schädliche Metalle – wie zum Beispiel Chrom, das in solchen Pellets oft vorhanden ist – sehr schnell vom Grundwasser aufgelöst werden können.

Die Aufgabe der Erfindung besteht darin, einen Weg aufzuzeigen, der eine bessere Entsorgung von Filterstäuben garantiert. Diese Aufgabe wird erfindungsgemäß dadurch gelöst, daß die Filterstäube flüssigen Prozeßschlacken, die bei der Gewinnung von Roheisen, Stahl oder sonstigen Gießereiprodukten anfallen, zugeführt werden. Auf diese Weise wird ein Versintern oder Einbinden von Filterstäuben in flüssigen Prozeßschlacken ermöglicht, damit die Bodenlöslichkeit schädlicher Metalle erschwert und eine umweltfreundliche Entsorgung von Filterstäuben ermöglicht.

Die Zuführung der Filterstäube in die flüssigen Prozeßschlacken kann von Hand, mechanisch oder pneumatisch erfolgen, wofür aus vielen Herstellungsbereichen entsprechende Vorrichtungen bekannt sind.

Patentanspruch

Verfahren zur Herstellung entsorgungsfähiger Filterstäube, dadurch gekennzeichnet, daß die Filterstäube flüssigen Prozeßschlacken, die bei der Gewinnung von Roheisen, Stahl oder sonstigen Gießereiprodukten anfallen, zugeführt werden.

0191904

KLIMMER GmbH.
Schlacken, Schrott-Recycling u. Beratung
Kastanienweg 9·Telefon 06821/52575
6680 Wiebelskirchen

**EUROPÄISCHER RECHERCHENBERICHT**

Europäisches Patentamt

EP 85 11 3580

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | DE-A-2 946 408  (PELT SHOYKAAS)<br>* Seite 5, Absatz 2; Ansprüche 1-5,7 *<br><br>--- | 1 | C 21 C    5/36<br>C 04 B    5/06 |
| X | US-A-3 365 340  (TISDALE)<br>* Ansprüche *<br><br>--- | 1 | |
| A | DE-C-  616 181  (R. MILDEN)<br><br>--- | | |
| A | DE-C-  332 628  (F. ECKERT)<br><br>----- | | |

RECHERCHIERTE SACHGEBIETE (Int Cl 4)

C 21 C
C 04 B
B 09 B

Der vorliegende Recherchenbericht wurde für alle Patentansprüche erstellt

| Recherchenort<br>DEN HAAG | Abschlußdatum der Recherche<br>22-05-1986 | Prüfer<br>OBERWALLENEY R.P.L.I |
|---|---|---|